# EUROPEAN PATENT APPLICATION

(11) **EP 3 965 517 A1**
(43) Date of publication of application: **09.03.2022**
(21) Application number: 19927134.7
(22) Date of filing: 02.05.2019
(51) Int. Cl.: H04W 74/08, H04W 28/04

(54) **BASE STATION DEVICE AND USER EQUIPMENT**

(71) Applicant: NTT DOCOMO, INC., Chiyoda-ku Tokyo 100-6150 (JP)
(72) Inventor: OHARA, Tomoya, Tokyo 100-6150 (JP); UCHINO, Tooru, Tokyo 100-6150 (JP); TAKAHASHI, Hideaki, Tokyo 100-6150 (JP); WANG, Lihui, Beijing, 100190 (CN); HOU, Xiaolin, Beijing, 100190 (CN)
(74) Representative: Hoffmann Eitle
(86) International application number: PCT/JP2019/018194
(87) International publication number: WO 2020/222283

(57) **Abstract**

A base station apparatus includes: a receiving unit configured to receive a first message from user equipment in a two-step random access procedure; and a control unit that determines not to return any feedback to the user equipment when the receiving unit correctly receives only some of a plurality of messages included in the first message.

## Description

### TECHNICAL FIELD

The present invention relates to a base station apparatus and a user equipment in a radio communication system.

### BACKGROUND ART

In 3rd Generation Partnership Project (3GPP), in order to further increase the system capacity, further increase the data transmission speed, and further reduce the delay in a wireless section, a radio communication system called 5G or New Radio (NR) (hereinafter, the radio communication system is referred to as "NR") has been studied. In the 5G, in order to satisfy the requirement that the delay in a wireless section should be 1 ms or less while realizing a throughput of 10 Gbps or more, various wireless technologies and network architectures have been studied.

### CITATION LIST

### NON-PATENT DOCUMENT

Non-Patent Document 1: 3GPP TS 38.321 V15.5.0 (2019-03)
Non-Patent Document 2: 3GPP TS 38.213 V15.5.0 (2019-03)

### SUMMARY OF THE INVENTION

### PROBLEM TO BE SOLVED BY THE INVENTION

In the NR, a random access procedure similar to LTE is defined (Non-Patent Document 1). In the NR, studies on a random access procedure (referred to as a two-step RACH) with a small number of steps have been started to reduce delay, power consumption, and the like.

However, in the current two-step RACH, no specific procedure has been proposed in a case where message reception has failed and the like. Therefore, there is a possibility that the procedure of the two-step RACH cannot be appropriately executed.

The invention has been made in view of the aforementioned points, and it is an object of the invention to provide a technique that enables the procedure of a two-step RACH to be appropriately executed in a radio communication system.

### MEANS FOR SOLVING PROBLEM

According to the disclosed technique, there is provided a base station apparatus including: a receiving unit configured to receive a first message from a user equipment in a two-step random access procedure; and a control unit that determines not to return any feedback to the user equipment when the receiving unit correctly receives only some of a plurality of messages included in the first message.

### EFFECT OF THE INVENTION

According to the disclosed technique, a technique that enables the procedure of a two-step RACH to be appropriately executed in a radio communication system is provided.

### BRIEF DESCRIPTION OF DRAWINGS

Fig. 1 is a diagram for describing a radio communication system according to an embodiment of the invention;
Fig. 2 is a diagram illustrating a four-step RACH;
Fig. 3 is a diagram illustrating a two-step RACH;
Fig. 4 is a diagram illustrating success/failure patterns for Msg. A;
Fig. 5 is a diagram illustrating success/failure patterns for Msg. B;
Fig. 6 is a sequence diagram illustrating an operation example in Example 1-1;
Fig. 7 is a sequence diagram illustrating an operation example in Example 1-2;
Fig. 8 is a sequence diagram illustrating an operation example in Example 1-3;
Fig. 9 is a diagram illustrating an example of Msg. B (in the case of one message);
Fig. 10 is a diagram illustrating an example of Msg. B (in the case of one message);
Fig. 11 is a diagram illustrating an example of Msg. B (in the case of one message);
Fig. 12 is a diagram illustrating an example of Msg. B (in the case of two messages);
Fig. 13 is a diagram illustrating an example of Msg. B (in the case of two messages);
Fig. 14 is a diagram illustrating an example of beams of Msg. 2 and Msg. 4;
Fig. 15 is a sequence diagram illustrating an operation example in Example 2-1;
Fig. 16 is a sequence diagram illustrating an operation example in Example 2-2;
Fig. 17 is a sequence diagram illustrating an operation example in Example 2-3;
Fig. 18 is a sequence diagram illustrating an operation example in Example 2-4;
Fig. 19 is a diagram for describing a PUCCH resource determination method;
Fig. 20 is a diagram illustrating an example of the functional configuration of base station apparatus 10 according to an embodiment of the invention;
Fig. 21 is a diagram illustrating an example of the functional configuration of user equipment 20 according to an embodiment of the invention; and
Fig. 22 is a diagram illustrating an example of the hardware configuration of base station apparatus 10 or user equipment 20 according to an embodiment of the invention.

### MODE(S) FOR CARRYING OUT THE INVENTION

Hereinafter, an embodiment of the invention will be described with reference to the diagrams. In addition, the embodiment described below is an example, and the embodiment to which the invention is applied is not limited to the following embodiment.

In the operation of the radio communication system according to the embodiment of the invention, known technology is appropriately used. The known technology is, for example, known NR or LTE, but is not limited to the known NR or LTE.

In addition, in this specification, terms used in known NR or LTE specifications, such as PUSCH, PDCCH, and PDSCH, are used. However, channel names, protocol names, signal names, function names, and the like used in this specification may be called other names.

### (System configuration)

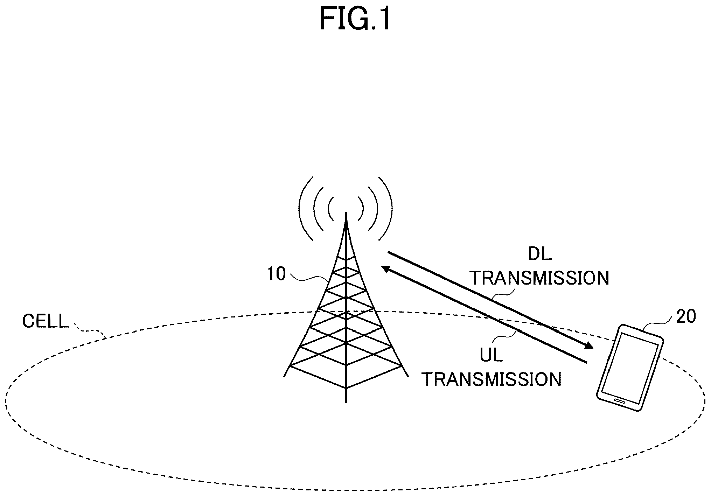

Fig. 1 is a diagram for describing a radio communication system according to an embodiment of the invention. As illustrated in Fig. 1, the radio communication system according to the embodiment of the invention includes a base station apparatus 10 and a user equipment 20. Fig. 1 illustrates one base station apparatus 10 and one user equipment 20, but this is an example, and a plurality of pieces of base station apparatuses 10 and a plurality of pieces of user equipments 20 may be provided.

The base station apparatus 10 is a communication device that provides one or more cells and performs radio communication with the user equipment 20. The physical resource of a radio signal is defined in a time domain and a frequency domain, and the time domain may be defined by the number of OFDM symbols, and the frequency domain may be defined by the number of subcarriers or the number of resource blocks. In addition, a Transmission Time Interval (TTI) in the time domain may be a slot, or the TTI may be a subframe.

The base station apparatus 10 transmits a synchronization signal and system information to the user equipment 20. The synchronization signal is, for example, NR-PSS and NR-SSS. The system information is transmitted through, for example, an NR-PBCH or a PDSCH, and is also referred to as broadcast information. As illustrated in Fig. 1, the base station apparatus 10 transmits a control signal or data to the user equipment 20 by Downlink (DL), and receives a control signal or data from the user equipment 20 by Uplink (UL). Note that, here, a signal transmitted through a control channel, such as a PUCCH or a PDCCH, is called a control signal, and a signal transmitted through a shared channel, such as a PUSCH or a PDSCH, is called data. However, such naming is an example.

The user equipment 20 is a communication device having a radio communication function, such as a smartphone, a mobile phone, a tablet, a wearable terminal, and a communication module for Machine-to-Machine (M2M). As illustrated in Fig. 1, the user equipment 20 uses various communication services provided by the radio communication system by receiving a control signal or data from the base station apparatus 10 by DL and transmitting a control signal or data to the base station apparatus 10 by UL. In addition, the user equipment 20 may be called a UE, and the base station apparatus 10 may be called a gNB.

### (Regarding random access procedure)

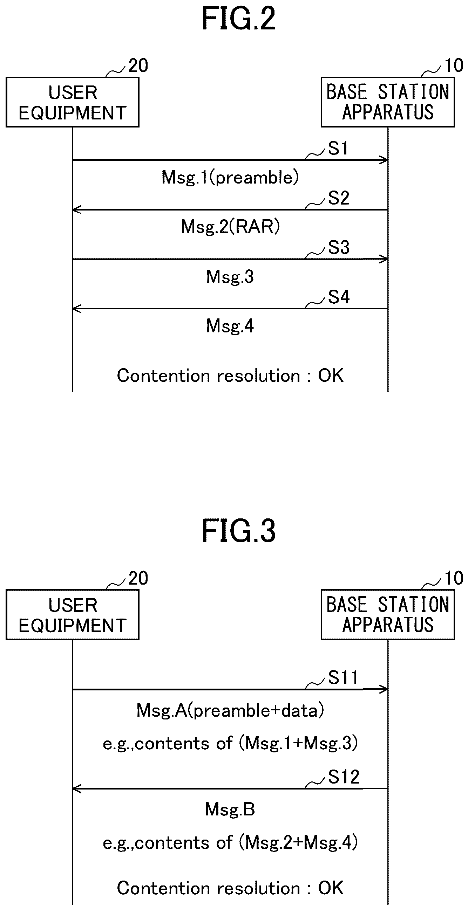

First, an example of a four-step random access procedure that can be executed in the radio communication system according to the present embodiment will be described with reference to Fig. 2. Note that, in the present embodiment, Contention based Random Access (CBRA) for which the number of steps is to be reduced will be described. In Contention Free Random Access (CFRA), basically, the random access procedure is completed when the UE receives Msg. 2. Therefore, the number of steps is small as it is. However, the invention is not limited to the CBRA, and the invention may be applied to the CFRA.

In the NR, a random access procedure can be executed by selecting an SS/PBCH block (also called SSB; may be called a synchronization signal block or a synchronization signal), or the random access procedure can be executed by selecting a Channel State Information-Reference Signal (CSI-RS).

For example, the base station apparatus 10 transmits the SSB (or the CSI-RS) for each beam, and the user equipment 20 monitors the SSB (or the CSI-RS) of each beam. The user equipment 20 selects an SSB (or a CSI-RS) whose received power is greater than a predetermined threshold value, among the plurality of SSBs (or CSI-RSs), and transmits Message1 (Msg. 1 (= RA preamble)) using a PRACH resource (PRACH occasion) corresponding to the selected SSB (or CSI-RS) (S1 in Fig. 2). Note that, the RA preamble may be referred to as a preamble.

When a preamble is detected, the base station apparatus 10 transmits a Message2 (Msg. 2 (= RAR: Random Access Response)), which is a response, to the user equipment 20 (S2). The user equipment 20 that has received the Msg. 2 transmits a Message3 (Msg. 3) including predetermined information to the base station apparatus 10 (S3) .

The base station apparatus 10 that has received the Msg. 3 transmits a Message4 (Msg. 4) to the user equipment 10 (S4). When it is confirmed that the predetermined information is included in the Msg. 4, the user equipment 10 recognizes that the Msg. 4 is Msg. 4 addressed to itself and corresponding to the Msg. 3 (Contention resolution: OK).

Since the above random access procedure includes four steps, this is called a four-step RACH (or a four-step random access procedure).

Next, a random access procedure in which the number of steps is reduced to reduce delay, power consumption, and the like will be described with reference to Fig. 3.

In S11, the user equipment 20 transmits a MessageA (Msg. A) having a preamble and data to the base station apparatus 10. As an example, the user equipment 20 selects a PRACH resource in the same manner as the selection of a PRACH resource (PRACH occasion) in the four-step RACH, and transmits a preamble using the PRACH resource and transmits data using a PUSCH resource linked to the PRACH resource. Note that, the preamble and the data herein correspond to, for example, Msg. 1 and Msg. 3 in the four-step RACH. Note that, in the two-step RACH, resources for transmitting data are not limited to the PUSCH resource, and any channel resources for transmitting data (or control information) may be used.

In S12, the base station apparatus 10 transmits a MessageB (Msg. B) to the user equipment 20. The content of the Msg. B corresponds to, for example, Msg. 2 and Msg. 4 in the four-step RACH.

Since the above random access procedure includes two steps, this is called a two-step RACH (or a two-step random access procedure). The two-step RACH is an example of a random access procedure with a reduced number of steps.

Note that, in the present embodiment, Msg. 1, Msg. 2, Msg. 3, and Msg. 4 appearing in the description of the two-step RACH are not always the same as Msg. 1, Msg. 2, Msg. 3, and Msg. 4 in the four-step RACH. Msg. 1, Msg. 2, Msg. 3, and Msg. 4 in the two-step RACH may be called Msg. 1-like Message, Msg. 2-like Message, Msg. 3-like Message, and Msg. 4-like Message, respectively.

Hereinafter, when "Msg. 1", "Msg. 2", "Msg. 3", and "Msg. 4" are used for the two-step RACH, these may be replaced with Msg. 1-like Message, Msg. 2-like Message, Msg. 3-like Message, and Msg. 4-like Message, respectively.

### (Regarding issues)

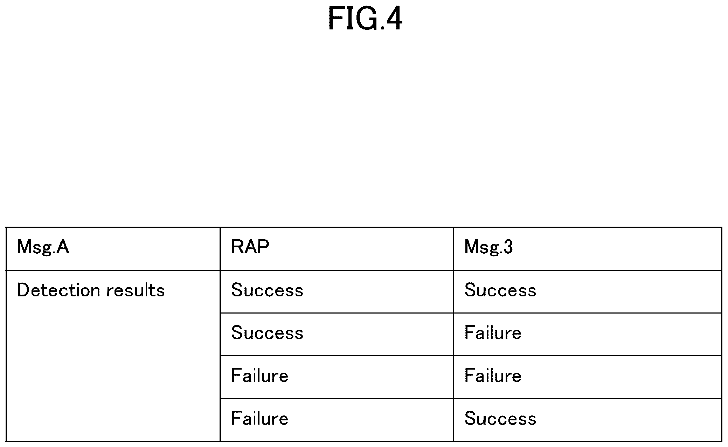

In the two-step RACH, there are a case where the base station apparatus 10 can normally receive the Msg. A that the user equipment 20 has transmitted and a case where the base station apparatus 10 cannot normally receive the Msg. A. More specifically, for example, there are patterns illustrated in Fig. 4. As illustrated in Fig. 4, there are cases of failure and success for each of the preamble and the Msg. 3 configuring the Msg. A.

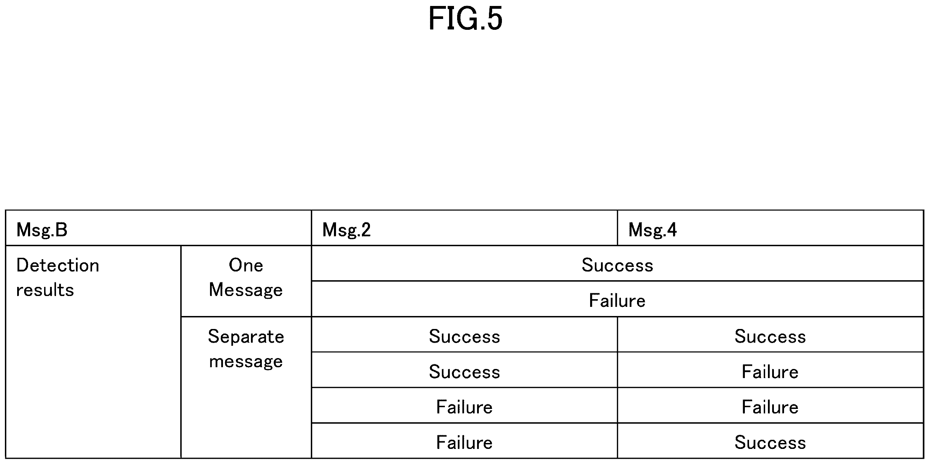

In addition, there are a case where the user equipment 20 can normally receive the Msg. B that the base station apparatus 10 has transmitted in response to the Msg. A and a case where the user equipment 20 cannot normally receive the Msg. B. More specifically, for example, there are patterns illustrated in Fig. 5. As illustrated in Fig. 5, when the Msg. B is configured by one message, there are cases of failure and success of the one message. When the Msg. B is divided into two messages of Msg. 2 and Msg. 4, there are cases of failure and success for each of the Msg. 2 and the Msg. 4 configuring the Msg. B. Note that, "Msg. B is configured by one message" means that the Msg. B is transmitted at one time, and the "one message" may be configured by a plurality of consecutive messages.

However, in the related art, a specific procedure when the base station apparatus 10 or the user equipment 20 fails to receive a message in the two-step RACH is not clear. In addition, the content of the Msg. B is not clear.

Hereinafter, operation examples when the base station apparatus 10 or the user equipment 20 fails to receive a message will be described as Example 1 and Example 2. In these examples, an example of the detailed content of the Msg. B will also be described.

First, Example 1 will be described. Example 1 is an example in which the base station apparatus 10 cannot normally receive the Msg. A in the two-step RACH. Example 1 includes Example 1-1, Example 1-2, and Example 1-3. Hereinafter, each example will be described.

### (Example 1-1)

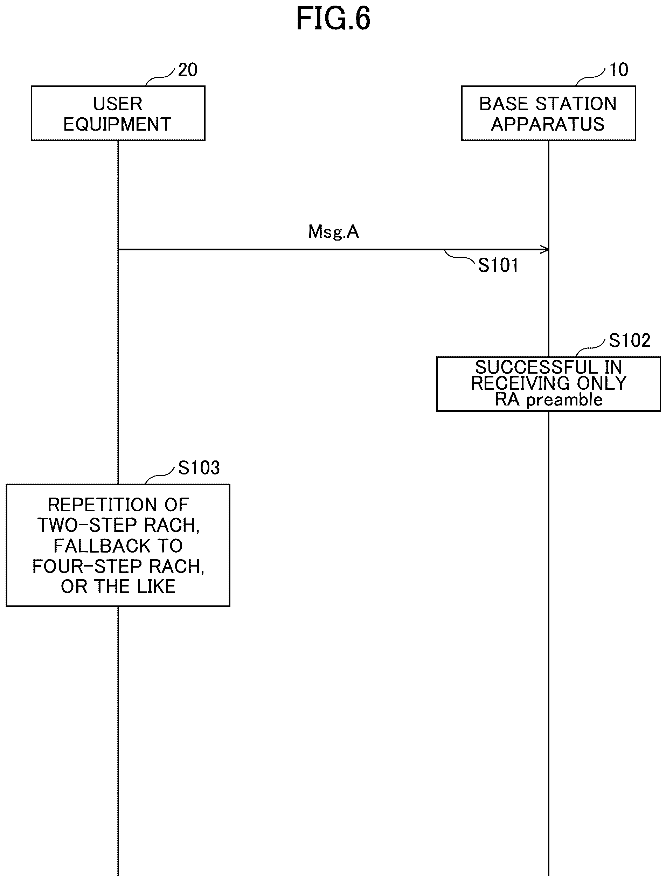

Fig. 6 is a sequence diagram illustrating an operation example of the two-step RACH in Example 1-1. In S101, the user equipment 20 transmits Msg. A including an RA preamble and Msg. 3. However, in S102, the base station apparatus 10 correctly receives only the RA preamble.

In S102, when the base station apparatus 10 determines that the RACH procedure according to the RA preamble is a two-step RACH from the RA preamble itself or the resource (PRACH occasion) to which the RA preamble has been transmitted, the base station apparatus 10 determines not to return any feedback.

For example, when the user equipment 20 detects that nothing is received in a time window waiting for the Msg. B, the user equipment 20 executes the operation of one of the following Options 1 to 3 in S103.

### <Option 1>

The user equipment 20 re-executes the two-step RACH. That is, the user equipment 20 transmits the Msg. A including the RA preamble and the Msg. 3 until the predetermined maximum number of transmissions is reached. When the two-step RACH is not successful (when the Msg. B is not received from the base station apparatus 10) even if the number of transmissions of Msg. A including the initial transmission reaches the maximum number of transmissions, the user equipment 20 falls back to the four-step RACH to transmit the RA preamble or notify (indicate) the higher layer of the problem.

### <Option 2>

The user equipment 20 falls back to a four-step RACH. That is, the user equipment 20 executes, for example, a four-step RACH described in Non-Patent Document 1, starting from the transmission of the RA preamble.

### <Option 3>

In Option 3, it is assumed that the RACH resource (PRACH occasion) can be distinguished into a resource for the four-step RACH and a resource for the two-step RACH.

The user equipment 20 falls back to the four-step RACH if the RACH resource (PRACH occasion) closest in the time domain from the point in time when executing the RACH procedure again is determined (or the point in time when the time window waiting for the Msg. B without receiving the Msg. B has passed) is a resource for the four-step RACH. If the closest RACH resource (PRACH occasion) is a resource for the two-step RACH, the two-step RACH is re-executed.

Note that, an operation based on the implementation of the user equipment 20 may be performed without defining the operation as in Options 1 to 3.

### (Example 1-2)

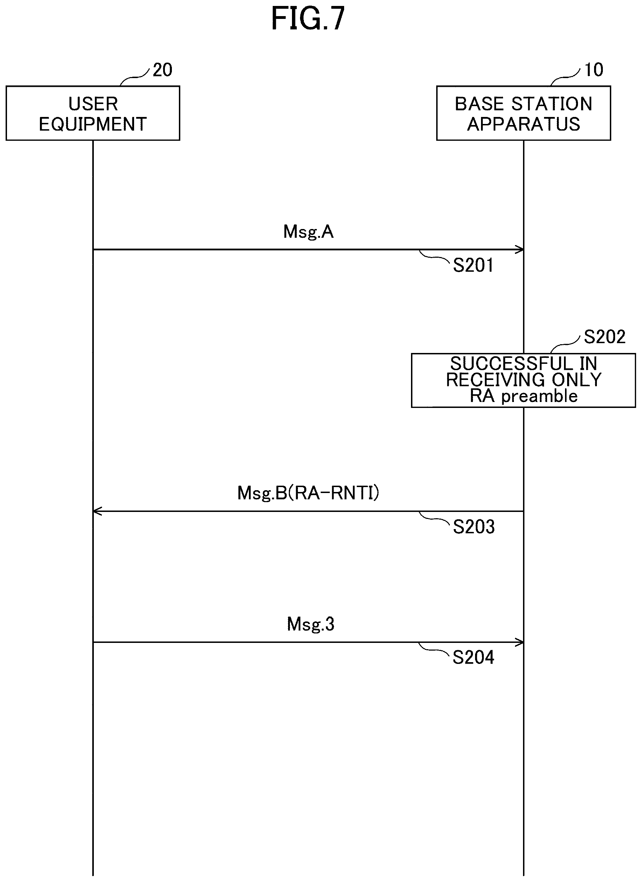

Fig. 7 is a sequence diagram illustrating an operation example of the two-step RACH in Example 1-2. In S201, the user equipment 20 transmits Msg. A including an RA preamble and Msg. 3. However, in S202, the base station apparatus 10 correctly receives only the RA preamble.

In S203, when the base station apparatus 10 determines that the RACH procedure according to the RA preamble is a two-step RACH from the RA preamble itself or the resource (PRACH occasion) by which the RA preamble has been transmitted, the base station apparatus 10 transmits Msg. B having a CRC scrambled by an RA-RNTI (RNTI for random access response) to the user equipment 20. Note that, details of the Msg. B will be described later.

The Msg. B transmitted in S203 includes, for example, only the Msg. 2-like Message. In this case, the Msg. B may be called "Msg. 2".

In addition, in order for the user equipment 20 to determine whether or not fallback to the four-step RACH is necessary, the Msg. B transmitted in S203 may include information, by which a response to the two-step RACH or a response to the four-step RACH can be determined, in addition to the Msg. 2-like Message. For example, information indicating whether the message is the Msg. B or the conventional Msg. 2 may be included.

In addition, the Msg. B transmitted in S203 may include the Msg. 2-like Message and the Msg. 4-like Message. Note that, the UL grant in the RAR (Msg. 2) has a limited size compared with a UL DCI size. Therefore, since the Msg. 2 and the Msg. 4 are included, sufficient schedule information for transmission of the Msg. 3 can be included more flexibly. In addition, other pieces of information, such as TA commands, can also be included with better granularity.

In S204, the user equipment 20 transmits the Msg. 3. More specifically, in S204, the user equipment 20 always transmits the Msg. 3 as initial transmission based on the Random Access Response (RAR) that is the Msg. 2. In this case, the user equipment 20 regenerates data.

Alternatively, in S204, the user equipment 20 may retransmit the Msg. 3 based on the Random Access Response (RAR) that is the Msg. 2. In this case, the user equipment 20 does not need to regenerate data. In addition, in the RAR, the Msg. 3 may be instructed to be transmitted as initial transmission or to be retransmitted.

### (Example 1-3)

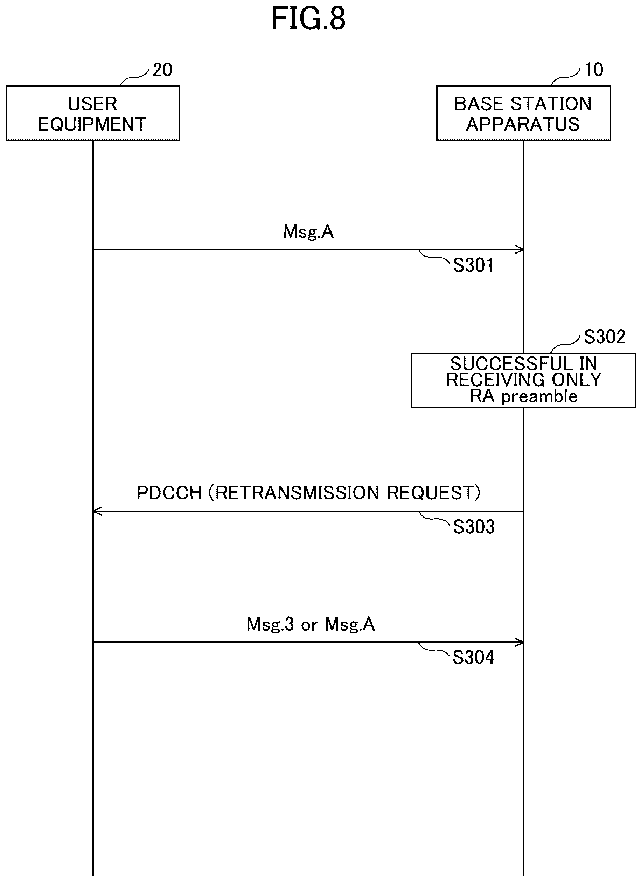

Fig. 8 is a sequence diagram illustrating an operation example of the two-step RACH in Example 1-3. In S301, the user equipment 20 transmits Msg. A including an RA preamble and Msg. 3. However, in S302, the base station apparatus 10 correctly receives only the RA preamble.

In S303, when the base station apparatus 10 determines that the RACH procedure according to the RA preamble is a two-step RACH from the RA preamble itself or the resource (PRACH occasion) by which the RA preamble has been transmitted, the base station apparatus 10 transmits a DCI having a CRC scrambled by a specific RNTI to the user equipment 20 through the PDCCH. The specific RNTI has a value determined based on the RACH resource used in S301, for example.

When the DCI is decoded by using the specific RNTI, the user equipment 20 determines that there has been a retransmission request from the base station apparatus 10, and transmits (or retransmits) the Msg. 3 (may be called Msg. A PUSCH) or the Msg. A (including the RA preamble and the Msg. 3) in S304. An instruction regarding which of the Msg. 3 and the Msg. A is to be transmitted and an instruction regarding retransmission or initial transmission may be given to the user equipment 20 by the DCI transmitted in S303. In addition, fallback to the four-step RACH may be instructed by the DCI transmitted in S303. In this case, in S304, the user equipment 20 transmits the RA preamble, or the user equipment 20 waits for the RAR without performing S304.

By the operation of Example 1 described above, it is possible to appropriately continue the operation even when the base station apparatus 10 cannot correctly receive the Msg. A. That is, the two-step RACH procedure can be appropriately executed.

Note that, although a case where only the RA preamble of the Msg. A can be correctly received has been described as an example in Example 1, the same operation as the operation described in Example 1 may be applied to a case where only a part of a plurality of messages included in the Msg. A are correctly received without being limited to the RA preamble.

### (Details of Msg. B)

Hereinafter, a detailed example of the Msg. B that can be applied to both Example 1 and Example 2 will be described.

### <Case 1>

In the two-step RACH, when the base station apparatus 10 can correctly receive the Msg. A transmitted from the user equipment 20, the base station apparatus 10 transmits Msg. B including at least RAPID (ID of the RA preamble) and UE Contention Resolution Identity (UE CRI). Note that, the Msg. B may further include a part or the entirety of the RAR.

### <Case 2>

In the two-step RACH, when the base station apparatus 10 can correctly receive only the RA preamble in the Msg. A transmitted from the user equipment 20, the base station apparatus 10 transmits, for example, Msg. B including at least RAPID. The Msg. B may further include an RAR. Such Msg. B may be called Msg. 2.

The user equipment 20 that has received the Msg. B including the RAR always transmits Msg. 3 as initial transmission based on the RAR, as described in Example 1-2. In this case, the user equipment 20 regenerates data.

In addition, the user equipment 20 may transmit the Msg. 3 as retransmission based on the RAR. In this case, the user equipment 20 does not need to regenerate data. In addition, the RAR includes an NDI field, and an instruction regarding whether to transmit the Msg. 3 as initial transmission or transmit the Msg. 3 as retransmission may be given using the value of the NDI. For example, NDI = 0 means transmitting the Msg. 3 as initial transmission, and NDI = 1 means transmitting the Msg. 3 as retransmission. The NDI field may be included in the UL grant in the RAR, or the CSI request field in the conventional RAR grant field may be used as the NDI field.

In addition, the Msg. B (or the Msg. 2) may include a function field indicating whether the message corresponds to Case 1 or Case 2. That is, for example, a field indicating whether the base station apparatus 10 has successfully received the entire Msg. A or the base station apparatus 10 has successfully received only the RA preamble in the Msg. A may be included. Based on the field, the user equipment 20 can determine the content of the message.

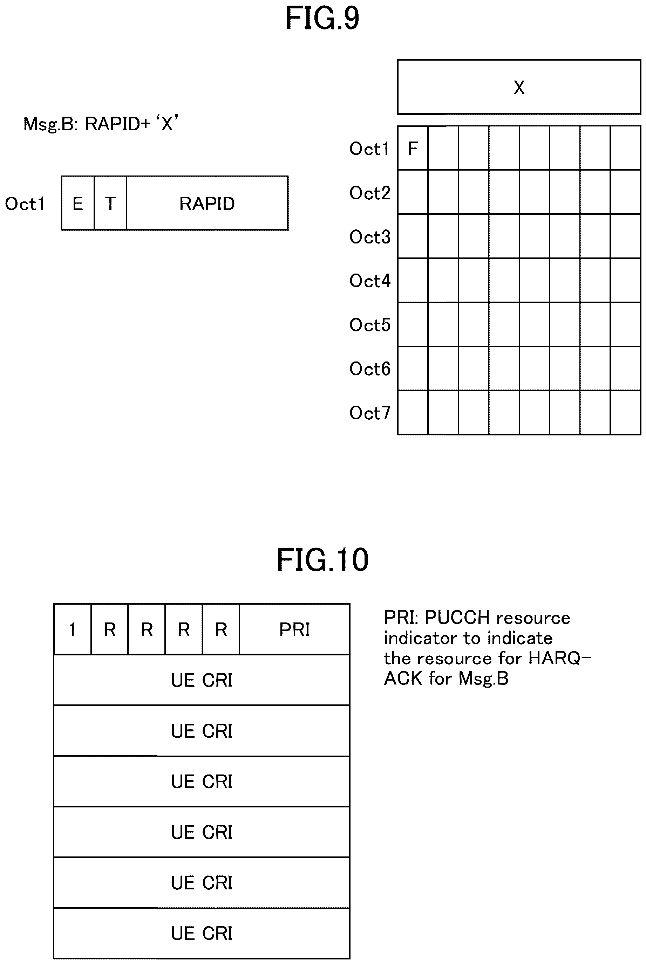

In addition, when the Msg. B is one message, its size may be Oct aligned. In addition, when the Msg. B is separated into two messages, the size of the Msg. 2-like Message may be Oct aligned. Note that, Oct aligned means that the message has a length of a multiple of eight bits (one octet), as illustrated in Fig. 9 and the like to be described later.

### <Specific example of the format of Msg. B>

Next, a specific example of the format of the Msg. B will be described with reference to Figs. 9 to 13. In the present embodiment, the format of the Msg. B is based on the format of the MAC PDU described in Non-Patent Document 1.

Figs. 9 to 11 are diagrams illustrating examples of a case where the Msg. B is one message. As illustrated in Fig. 9, the Msg. B in this case is a message (may be called MAC subPDU) in which RAPID and a message X are connected to each other. More specifically, the RAPID is, for example, one-octet-long MAC subheader configured as "E + T + RAPID". As described in Non-Patent Document 1, E is Extension field and T is Type field.

The message X is a seven-octet message, and the bit of "F" indicates the above-described Case 1 or Case 2. For example, when F = 1, the message X is a message corresponding to Case 1, and when F = 0, the message X is a message corresponding to Case 2.

Fig. 10 illustrates an example of the message X when F = 1 (Case 1: Msg. A successfully received). In Fig. 10, R is a Reserved bit. PRI is a PUCCH resource indicator, and is a resource for HARK-ACK (ACK/NACK) transmission for the Msg. B. An example of using the PRI will be described later.

UE CRI in Fig. 10 is UE Contention Resolution Identity. The UE CRI field includes, for example, the entirety or a part of UL CCCH SDU included in the Msg. 3.

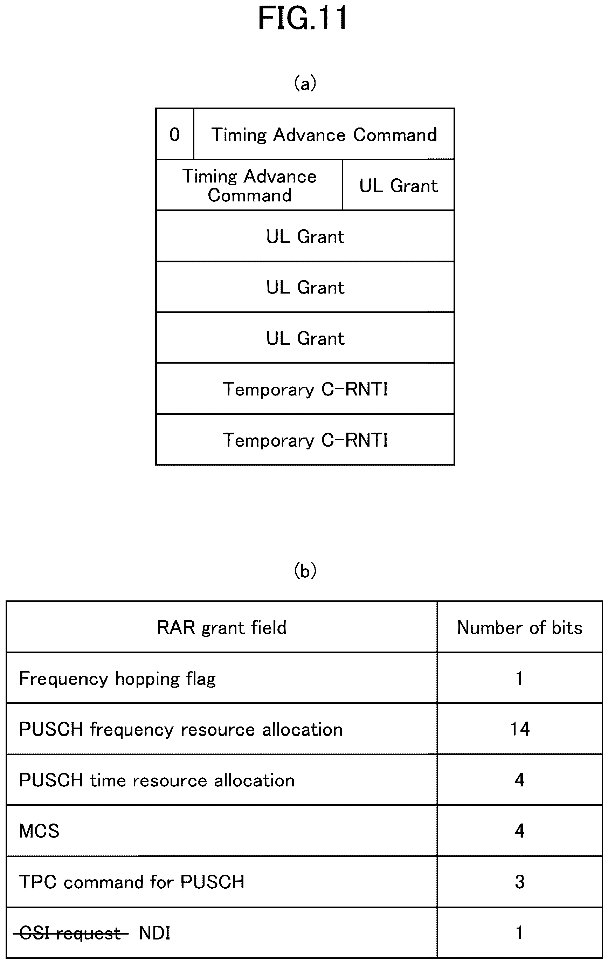

Fig. 11(a) illustrates an example of the message X when F = 0 (Case 0: only the RA preamble successfully received). The message X corresponds to a message in which R in the format of the MAC RAR described in Non-Patent Document 1 is replaced with F (in this case, 0). The meaning of each field other than F = 0 is as described in Non-Patent Document 1.

Fig. 11(b) illustrates the content of the UL grant. Fig. 11(b) is a table obtained by replacing the CSI request with the NDI described above in "Table 8.2-1: Random Access Response Grant Content field size" of Non-Patent Document 2. In the CBRA assumed in the present embodiment, since the CSI report is not triggered, the CSI request is replaced with the NDI.

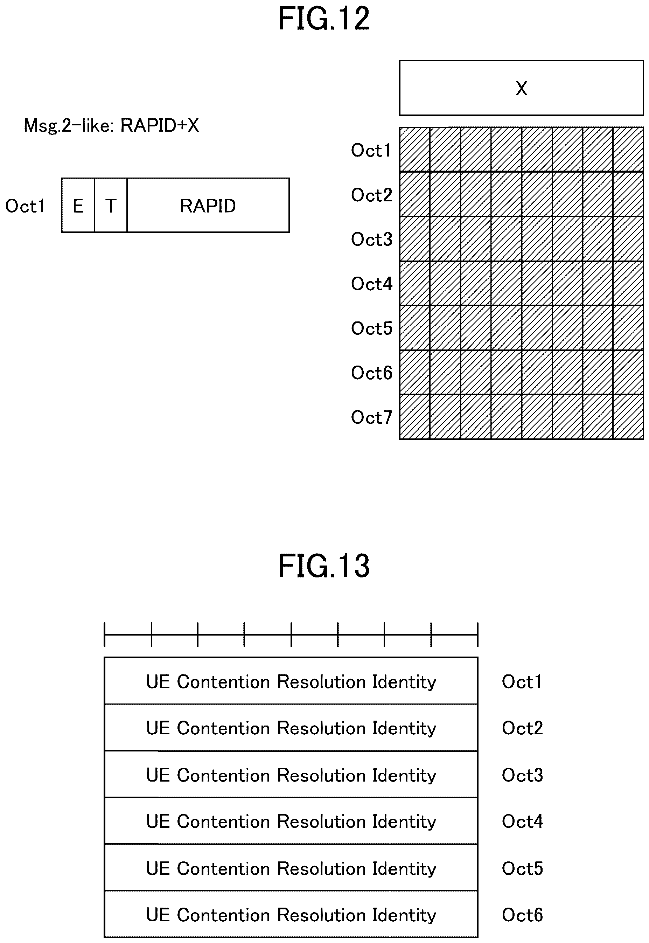

Figs. 12 and 13 are diagrams illustrating examples of a case where the Msg. B is separated into two messages (Msg. 2-like Message and Msg. 4-like Message). However, in Case 2 (in a case where only the Ra preamble is successfully received), the Msg. 4-like Message may not be transmitted.

Fig. 12 illustrates Msg. 2-like Message. As illustrated in Fig. 12, the Msg. 2-like Message in this case is a message (may be called MAC subPDU) in which RAPID and a message X are connected to each other. More specifically, the RAPID is, for example, one-octet-long MAC subheader configured as "E + T + RAPID".

The message X is a message of seven octets. For example, when Msg. 2 is followed by Msg. 4, the message X includes scheduling information for Msg. 4 reception (for example, Msg. 4 reception time and beam information). In addition, when Msg. 2 is not followed by Msg. 4 (Case 2), the message X includes information corresponding to the RAR (such as scheduling information for Msg. 3 transmission).

Fig. 13 is an example of the Msg. 4-like Message, and includes UE Contention Resolution Identity as illustrated in the diagram.

Hereinafter, Options 1 to 3 of a Msg. B transmission method will be described.

### <Option 1 of Msg. B transmission method>

When the Msg. B is transmitted in one message, the Msg. B is transmitted through the PDSCH scheduled by the DCI transmitted on the PDCCH, which has a CRC scrambled by the RA-RNTI.

### <Option 2 of Msg. B transmission method>

When the Msg. B is transmitted in one message, the Msg. B is transmitted through the PDSCH scheduled by the DCI transmitted on the PDCCH, which has a CRC scrambled by the C-RNTI. The C-RNTI is, for example, UE-identity transmitted by the Msg. A (that is, Msg. 3) transmitted through the PUSCH.

### <Option 3 of Msg. B transmission method>

When the Msg. B is transmitted in two messages, the Msg. 2 is transmitted through the PDSCH scheduled by the DCI transmitted on the PDCCH, which has a CRC scrambled by the RA-RNTI. The Msg. 4 is transmitted through the PDSCH scheduled by the DCI transmitted on the PDCCH, which has a CRC scrambled by the C-RNTI. The base station apparatus 10 may notify the user equipment 20 of the C-RNTI through the Msg. 2.

When the Msg. 2 and the Msg. 4 are transmitted in different slots, a time gap between the Msg. 2 and the Msg. 4 may be defined. The base station apparatus 10 may notify the user equipment 20 of the time gap using the Msg. 2 in the Msg. B.

In addition, the base station apparatus 10 may notify the user equipment 20 of TCI state, which is information indicating a reception beam assumed when the user equipment 20 receives the Msg. 4, using the Msg. 2. The base station apparatus 10 may notify the user equipment 20 of the TCI state using the DCI transmitted through the PDCCH for scheduling the Msg. 4.

In addition, the user equipment 20 may determine that the reception beam assumed when the Msg. 4 is received is the same as the reception beam assumed when the PDCCH for scheduling the Msg. 4 is received. In addition, the user equipment 20 may determine that the reception beam assumed when the Msg. 4 is received is the same as the reception beam assumed when the Msg. 2 is received. In addition, the user equipment 20 may determine that the reception beam assumed when the Msg. 4 is received is the same as the reception beam assumed when the PDCCH for scheduling the Msg. 2 is received.

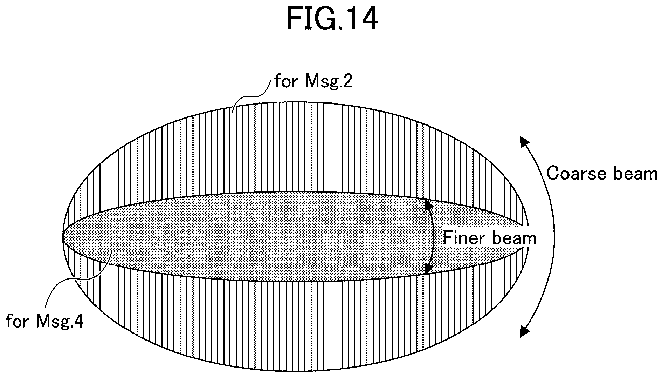

Fig. 14 illustrates an example of reception beams of Msg. 2 and Msg. 4. RA-RNTI is used for transmission of the Msg. 2. Since the RA-RNTI targets a group of user equipments, the beam granularity is coarse. That is, the beam width is large. On the other hand, C-RNTI is used for transmission of the Msg. 4. Since the C-RNTI targets a specific user equipment, the beam granularity is fine. That is, the beam width is small.

Next, Example 2 will be described. Example 2 is an example in which the user equipment 20 cannot normally receive the Msg. B in the two-step RACH. Example 2 includes Example 2-1, Example 2-2, Example 2-3, and Example 2-4. Hereinafter, each example will be described.

### (Example 2-1)

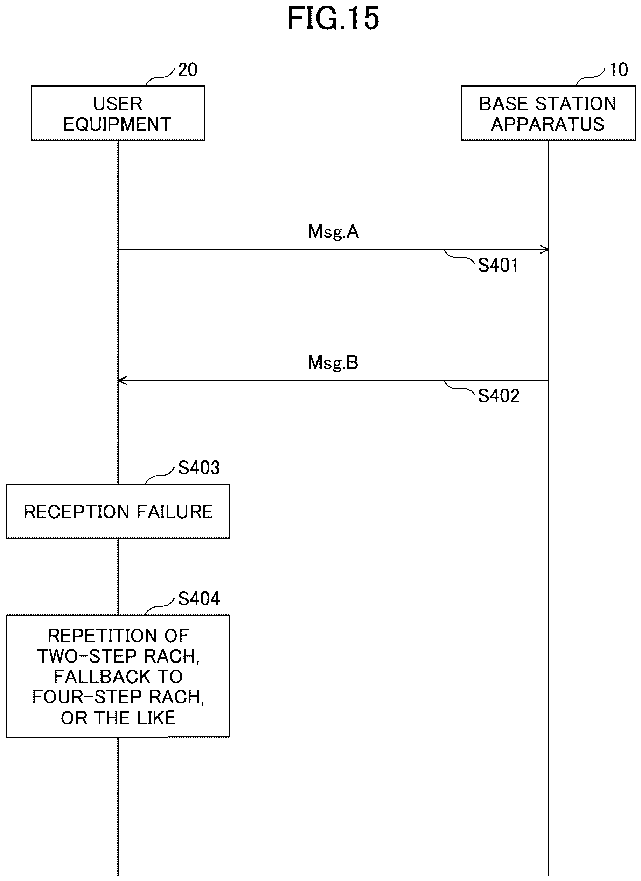

Fig. 15 is a sequence diagram illustrating an operation example of the two-step RACH in Example 2-1. In S401, the user equipment 20 transmits Msg. A including an RA preamble and Msg. 3. In S402, the base station apparatus 10 transmits the Msg. B.

The user equipment 20 fails to receive the Msg. B (S403). The reception failure herein means that, for example, when the Msg. B is one message, the user equipment 20 cannot detect the PDCCH (DCI) for scheduling the Msg. B in a time window waiting for the Msg. B. In addition, the reception failure herein means that, for example, when the Msg. B includes two messages, the user equipment 20 has failed to decode both the Msg. 2 and the Msg. 4 in the time window waiting for the Msg. B.

In response to the Msg. B reception failure, the base station apparatus 10 does not return any feedback. In S404, the user equipment 20 performs an operation of one of the following Options 1 to 3.

### <Option 1>

The user equipment 20 re-executes the two-step RACH. That is, the user equipment 20 transmits the Msg. A including the RA preamble and the Msg. 3 until the predetermined maximum number of transmissions is reached. When the two-step RACH is not successful (when the Msg. B from the base station apparatus 10 is not detected) even if the number of transmissions of Msg. A including the initial transmission reaches the maximum number of transmissions, the user equipment 20 falls back to the four-step RACH to transmit the RA preamble or notify (indicate) the higher layer of the problem.

### <Option 2>

The user equipment 20 falls back to a four-step RACH. That is, the user equipment 20 executes, for example, a four-step RACH described in Non-Patent Document 1, starting from the transmission of the RA preamble.

### <Option 3>

In Option 3, it is assumed that the RACH resource (PRACH occasion) can be distinguished into a resource for the four-step RACH and a resource for the two-step RACH.

The user equipment 20 falls back to the four-step RACH if the RACH resource (PRACH occasion) closest in the time domain from the point in time when executing the RACH procedure again is determined (or the point in time when the time window waiting for the Msg. B without receiving the Msg. B has passed) is a resource for the four-step RACH. If the closest RACH resource (PRACH occasion) is a resource for the two-step RACH, the two-step RACH is re-executed.

Note that, an operation based on the implementation of the user equipment 20 may be performed without defining the operation as in Options 1 to 3.

### (Example 2-2)

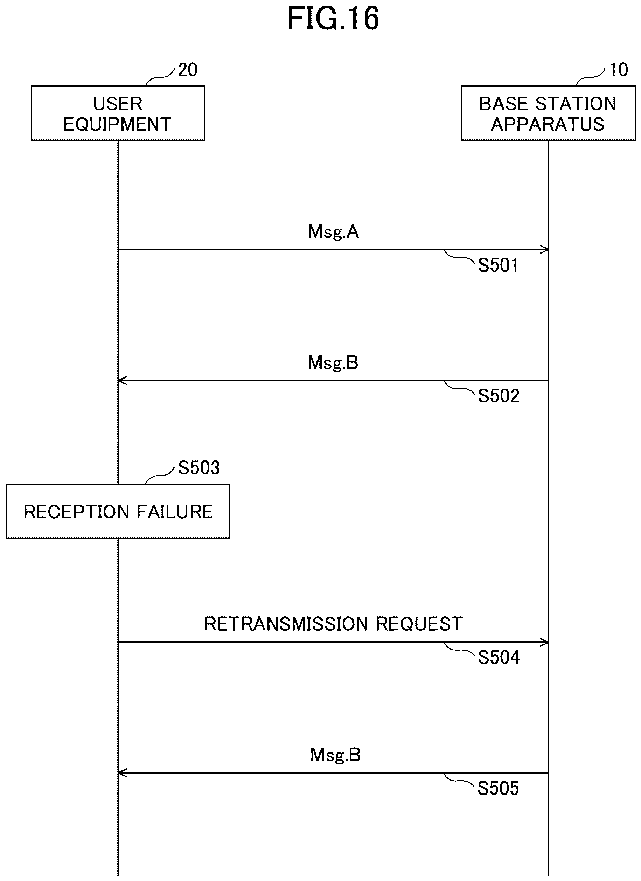

Fig. 16 is a sequence diagram illustrating an operation example of the two-step RACH in Example 2-2. S501 to S503 are the same as S401 to S403 in Example 2-1.

For example, if the user equipment 20 cannot detect the Msg. B in the time window waiting for the Msg. B, the user equipment 20 transmits a retransmission request to the base station apparatus 10 in S504. The retransmission request may be an RA preamble (preamble meaning a retransmission request), a Scheduling Request (SR), or a signal other than these. In S505, the base station apparatus 10 retransmits the Msg. B.

### (Example 2-3)

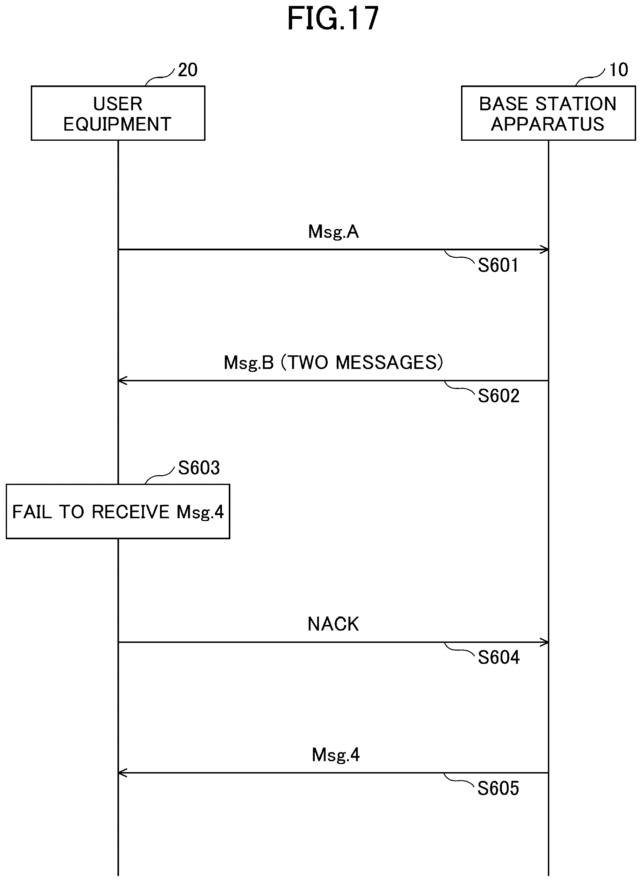

Fig. 17 is a sequence diagram illustrating an operation example of the two-step RACH in Example 2-3. In Example 2-3, the Msg. B includes two messages of Msg. 2 and Msg. 4.

In S601, the user equipment 20 transmits Msg. A including an RA preamble and Msg. 3. In S602, the base station apparatus 10 transmits the Msg. B (Msg. 2 and Msg. 4) .

The user equipment 20 succeeds in receiving the Msg. 2, but fails to receive the Msg. 4 (S603). In S604, the user equipment 20 transmits NACK for the reception of the Msg. 4 to the base station apparatus 10. In S605, the base station apparatus 10 retransmits the Mag. 4 in the Mag. B to the user equipment 20.

### (Example 2-4)

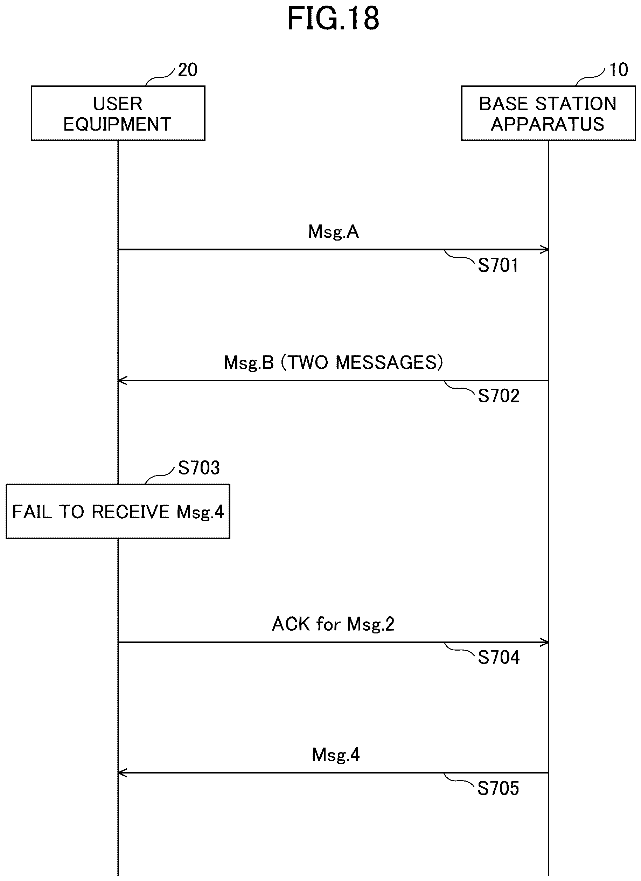

Fig. 18 is a sequence diagram illustrating an operation example of the two-step RACH in Example 2-4. In Example 2-4, the Msg. B includes two messages of Msg. 2 and Msg. 4.

In S701, the user equipment 20 transmits Msg. A including an RA preamble and Msg. 3. In S702, the base station apparatus 10 transmits the Msg. B (Msg. 2 and Msg. 4) .

The user equipment 20 succeeds in receiving the Msg. 2, but fails to receive the Msg. 4 (S703). In S704, the user equipment 20 transmits ACK for the Msg. 2 to the base station apparatus 10. In S705, the base station apparatus 10 retransmits the Mag. 4 in the Mag. B to the user equipment 20.

Note that, in Examples 2-3 and 2-4, the user equipment 20 that has failed to receive the Msg. 4 may transmit nothing to the base station apparatus 10.

By the operation of Example 2 described above, it is possible to appropriately continue the operation even when the user equipment 20 cannot correctly receive the Msg. B. That is, the two-step RACH procedure can be appropriately executed.

Note that, although a case where only the Msg. 2 of the Msg. B can be correctly received has been described as an example in Examples 2-3 and 2-4, the same operation as the operation described in Example 2 may be applied to a case where only a part of a plurality of messages included in the Msg. B are correctly received without being limited to the Msg. 2.

### <HARQ-ACK feedback for Msg. B>

Here, an example of a HARQ-ACK feedback method for the Msg. B that can be applied to both Examples 1 and 2 will be described.

When the Msg. B is configured by one message, information indicating a PUCCH resource used by the user equipment 20 to transmit HARQ-ACK information (ACK or NACK) is included in a portion corresponding to the Msg. 4 in the Msg. B. For example, the PRI illustrated in Fig. 10 is the information indicating the PUCCH resource. The PRI may be a 3-bit PRI (a PUCCH resource is determined by combination of a 4-bit RMSI and the like) described below, or may independently indicate a PUCCH resource for the user equipment 20.

When the Msg. B is configured by two messages, the PUCCH resource used by the user equipment 20 to transmit the HARQ-ACK information (ACK or NACK) is determined based on 4-bit Remaining Minimum System Information (RMSI) that is broadcast information, 3-bit PRI in the DCI, and CCE-based implicit 1-bit. The DCI is, for example, a DCI for scheduling of Msg. 4. The CCE is the lowest CCE index in which the DCI is disposed.

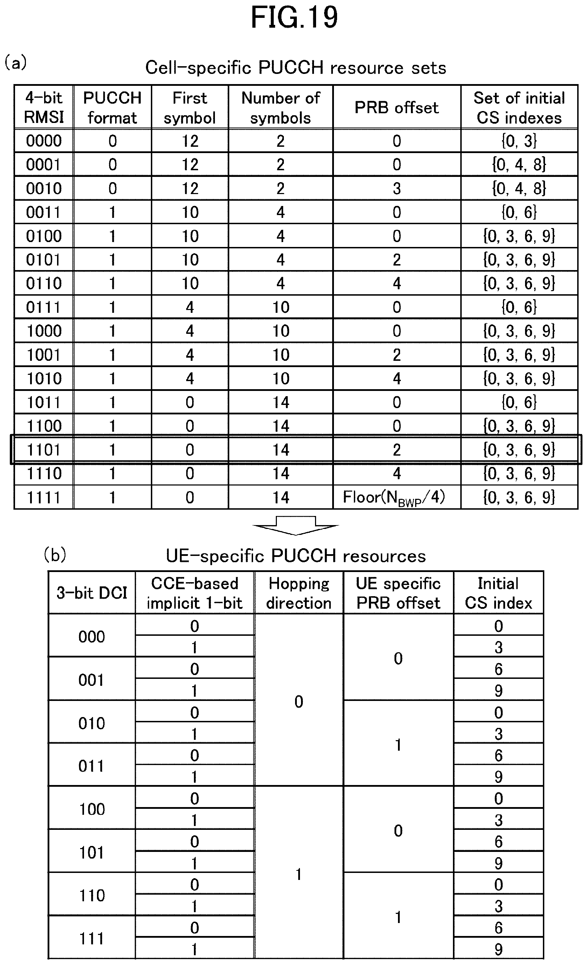

The method itself for determining a PUCCH resource by combination of 4-bit RMSI, 3-bit PRI, and the like is a known technique described in Non-Patent Document 2 or the like. Specifically, as illustrated in Fig. 19(a), a cell-specific PUCCH resource set is determined by the 4-bit RMSI. Then, as illustrated in Fig. 10(b) (in the case of 4-bit RMSI = 1101), the PUCCH resource used by the corresponding user equipment 20 is determined based on the 3-bit DCI (= 3-bit PRI) and the CCE-based implicit 1-bit.

### (Equipment configuration)

Next, functional configuration examples of the base station apparatus 10 and the user equipment 20 that execute the processing and the operations described up to now will be described. The base station apparatus 10 and the user equipment 20 have functions for implementing Example 1 and Example 2 described above. However, each of the base station apparatus 10 and the user equipment 20 may have only some of the functions of Example 1 and Example 2.

### <Base station apparatus 10>

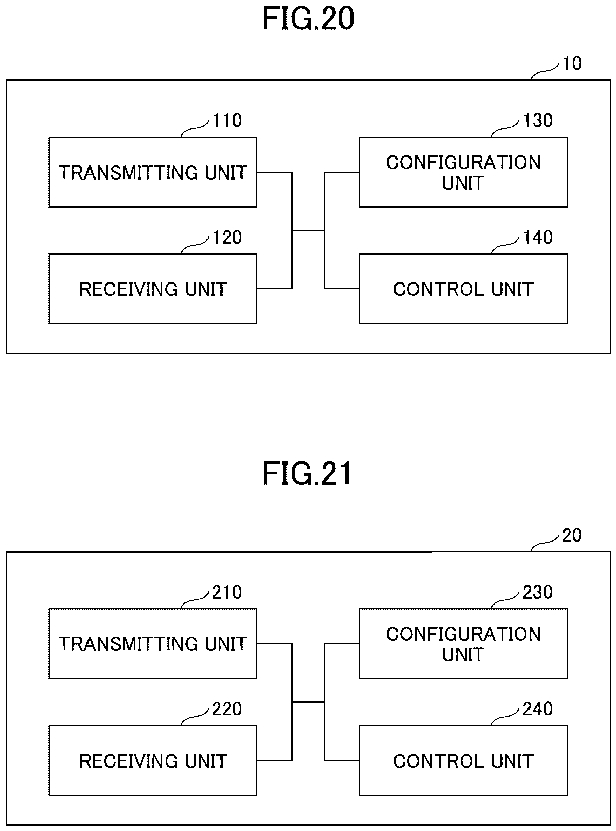

Fig. 20 is a diagram illustrating an example of the functional configuration of the base station apparatus 10. As illustrated in Fig. 20, the base station apparatus 10 includes a transmitting unit 110, a receiving unit 120, a configuration unit 130, and a control unit 140. The functional configuration illustrated in Fig. 20 is only an example. As long as the operation according to the embodiment of the invention can be performed, any functional division and any name of each functional unit may be applied.

The transmitting unit 110 has a function of generating a signal to be transmitted to the user equipment 20 and transmitting the signal wirelessly. The receiving unit 120 has a function of receiving various signals transmitted from the user equipment 20 and acquiring, for example, information of higher layers from the received signals. In addition, the transmitting unit 110 has a function of transmitting NR-PSS, NR-SSS, NR-PBCH, a DL/UL control signal, DL data, and the like to the user equipment 20.

The configuration unit 130 stores a configuration set in advance and various configurations to be transmitted to the user equipment 20 in a storage device provided in the setting unit 130, and reads out the configuration from the storage device as necessary. The content of the configuration is, for example, a preamble resource, a PUSCH resource, and the like used for a random access procedure.

The control unit 140 controls the base station apparatus 10. In addition, for example, the control unit 140 determines not to return any feedback to the user equipment when only some of the plurality of messages included in the Msg. A are correctly received.

### <User equipment 20>

Fig. 21 is a diagram illustrating an example of the functional configuration of the user equipment 20. As illustrated in Fig. 21, the user equipment 20 includes a transmitting unit 210, a receiving unit 220, a configuration unit 230, and a control unit 240. The functional configuration illustrated in Fig. 21 is only an example. As long as the operation according to the embodiment of the invention can be performed, any functional division and any name of each functional unit may be applied.

The transmitting unit 210 generates a transmission signal from transmission data, and transmits the transmission signal wirelessly. The receiving unit 220 wirelessly receives various signals, and acquires a higher-layer signal from the received physical layer signal. In addition, the receiving unit 220 measures a DL signal.

The configuration unit 230 stores the various configurations, which have been received from the base station apparatus 10 by the receiving unit 220, in a storage device provided in the setting unit 230, and reads out the configuration from the storage device as necessary. The configuration unit 230 also stores the configuration set in advance. The content of the configuration is, for example, a preamble resource, a PUSCH resource, and the like used for a random access procedure. The control unit 240 controls the user equipment 20.

### (Hardware configuration)

The block diagrams (Figs. 20 and 21) used in the description of the above embodiment illustrate blocks in functional units. These functional blocks (configuration units) are realized by any combination of at least one of hardware and software. In addition, a method of realizing each functional block is not particularly limited. That is, each functional block may be realized using one physically or logically coupled device, or may be realized by connecting two or more physically or logically separated devices directly or indirectly (for example, using a wired or wireless connection) and using the plurality of devices. Each functional block may be realized by combining the above-described one device or the above-described plurality of devices with software.

Functions include determining, judging, calculating, computing, processing, deriving, investigating, looking up, ascertaining, receiving, transmitting, output, access, resolving, selecting, choosing, establishing, comparing, assuming, expecting, regarding, broadcasting, notifying, communicating, forwarding, configuring, reconfiguring, allocating, mapping, assigning, and the like, but are not limited thereto. For example, a functional block (configuration unit) that makes transmission function is called a transmitting unit or a transmitter. In any case, as described above, the realization method is not particularly limited.

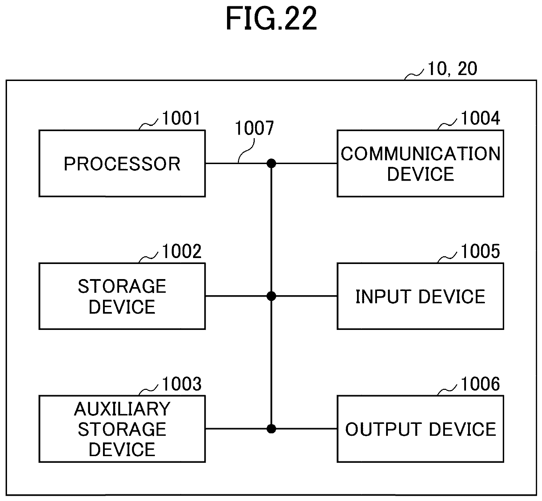

For example, the base station apparatus 10, the user equipment 20, and the like according to an embodiment of the present disclosure may function as a computer that performs processing of the radio communication method according to the present disclosure. Fig. 22 is a diagram illustrating an example of the hardware configuration of the base station apparatus 10 and the user equipment 20 according to an embodiment of the present disclosure. Each of the base station apparatus 10 and the user equipment 20 described above may be physically configured as a computer apparatus including a processor 1001, a storage device 1002, an auxiliary storage device 1003, a communication device 1004, an input device 1005, an output device 1006, a bus 1007, and the like.

Note that, in the following description, the term "device" can be read as a circuit, a unit, and the like. The hardware configuration of each of the base station apparatus 10 and the user equipment 20 may be configured to include one or more devices for each device illustrated in the diagram, or may be configured not to include some devices.

Each function in the base station apparatus 10 and the user equipment 20 can be realized by reading predetermined software (program) onto hardware, such as the processor 1001 and the storage device 1002, so that the processor 1001 performs an operation and controlling communication using the communication device 1004 or controlling at least one of reading and writing of data in the storage device 1002 and the auxiliary storage device 1003.

The processor 1001 controls the entire computer by operating an operating system, for example. The processor 1001 may be configured by a central processing unit (CPU) including an interface with peripheral equipment, a control device, an operation device, a register, and the like. For example, the control unit 140, the control unit 240, and the like described above may be realized by the processor 1001.

In addition, the processor 1001 reads a program (program code), a software module, data, and the like into the storage device 1002 from at least one of the auxiliary storage device 1003 and the communication device 1004, and executes various kinds of processing according to these. As the program, a program causing a computer to execute at least a part of the operation described in the above embodiment is used. For example, the control unit 140 of the base station apparatus 10 illustrated in Fig. 20 may be realized by a control program that is stored in the storage device 1002 and operated by the processor 1001. In addition, for example, the control unit 240 of the user equipment 20 illustrated in Fig. 21 may be realized by a control program that is stored in the storage device 1002 and operated by the processor 1001. Although it has been described that the various kinds of processing described above are executed by one processor 1001, the various kinds of processing described above may be executed simultaneously or sequentially by two or more processors 1001. The processor 1001 may be implemented by one or more chips. In addition, the program may be transmitted from a network through a telecommunication line.

The storage device 1002 is a computer-readable recording medium, and may be configured by at least one of, for example, a Read Only Memory (ROM), an Erasable Programmable ROM (EPROM), an Electrically Erasable Programmable ROM (EEPROM), and a Random Access Memory (RAM). The storage device 1002 may be called a register, a cache, a main memory, and the like. The storage device 1002 can store a program (program code), a software module, and the like that can be executed to execute the communication method according to an embodiment of the present disclosure.

The auxiliary storage device 1003 is a computer-readable recording medium, and may be configured by at least one of, for example, an optical disk such as a Compact Disc ROM (CD-ROM), a hard disk drive, a flexible disk, and a magneto-optical disk (for example, a compact disk, a digital versatile disk, and a Blu-ray (Registered trademark) disk), a smart card, a flash memory (for example, a card, a stick, a key drive), a floppy (registered trademark) disk, and a magnetic strip. The auxiliary storage device 1003 may be called an auxiliary storage device. The storage medium described above may be, for example, a database including at least one of the storage device 1002 and the auxiliary storage device 1003, a server, or other appropriate media.

The communication device 1004 is hardware (transmitting and receiving device) for performing communication between computers through at least one of a wired network and a radio network, and is also referred to as, for example, a network device, a network controller, a network card, and a communication module. The communication device 1004 may be configured to include, for example, a high-frequency switch, a duplexer, a filter, a frequency synthesizer, and the like in order to realize at least one of frequency division duplex (FDD) and time division duplex (TDD), for example. For example, a transmitting and receiving antenna, an amplifier unit, a transmitting and receiving unit, a transmission line interface, and the like may be realized by the communication device 1004. The transmitting and receiving unit may be implemented so as to be physically or logically separated from the transmitting unit and the receiving unit.

The input device 1005 is an input device (for example, a keyboard, a mouse, a microphone, a switch, a button, and a sensor) for receiving an input from the outside. The output device 1006 is an output device (for example, a display, a speaker, and an LED lamp) that performs output to the outside. In addition, the input device 1005 and the output device 1006 may be integrated (for example, a touch panel).

In addition, respective devices, such as the processor 1001 and the storage device 1002, are connected to each other by the bus 1007 for communicating information. The bus 1007 may be configured using a single bus, or may be configured using a different bus for each device.

In addition, each of the base station apparatus 10 and the user equipment 20 may be configured to include hardware, such as a microprocessor, a digital signal processor (DSP), an Application Specific Integrated Circuit (ASIC), a Programmable Logic Device (PLD), and a Field Programmable Gate Array (FPGA), and some or all of the functional blocks may be realized by the hardware. For example, the processor 1001 may be implemented using at least one of these hardware components.

### (Summary of embodiment)

As described above, according to the present embodiment, at least base station apparatus and user equipment described in the following articles are provided.

### (Article 1)

A base station apparatus including: a receiving unit configured to receive a first message from user equipment in a two-step random access procedure; and a control unit that determines not to return any feedback to the user equipment when the receiving unit correctly receives only some of a plurality of messages included in the first message.

### (Article 2)

A base station apparatus including: a receiving unit configured to receive a first message from user equipment in a two-step random access procedure; and a transmitting unit that transmits a second message to the user equipment using an RNTI for a random access response when the receiving unit correctly receives only some of a plurality of messages included in the first message.

### (Article 3)

A base station apparatus including: a receiving unit configured to receive a first message from a user equipment in a two-step random access procedure; and a transmitting unit that transmits a retransmission request to the user equipment when the receiving unit correctly receives only some of a plurality of messages included in the first message.

### (Article 4)

A user equipment including: a receiving unit configured to receive a second message transmitted from base station apparatus as a response to a first message in a two-step random access procedure; and a transmitting unit that repeatedly transmits the first message or falls back to a four-step random access procedure and transmits a preamble when the receiving unit does not correctly receive the second message.

### (Article 5)

A user equipment including: a receiving unit configured to receive a second message transmitted from base station apparatus as a response to a first message in a two-step random access procedure; and a transmitting unit that transmits an NACK for a message, which is not correctly received, to the base station apparatus when the receiving unit does not correctly receive only some of a plurality of messages included in the second message.

### (Article 6)

A user equipment including: a receiving unit configured to receive a second message transmitted from base station apparatus as a response to a first message in a two-step random access procedure; and a transmitting unit that transmits an ACK for a message, which is correctly received, to the base station apparatus when the receiving unit correctly receives only some of a plurality of messages included in the second message.

According to each of the above-described Articles 1 to 6, a technique that enables the procedure of a two-step RACH to be appropriately executed in a radio communication system is provided.

### (Supplement to embodiment)

While the embodiment of the invention has been described above, the disclosed invention is not limited to such an embodiment, and those skilled in the art will understand various variations, modifications, alternatives, substitutions, and the like. Although the description has been made using specific numerical examples to facilitate the understanding of the invention, those numerical values are merely examples and any appropriate values may be used unless otherwise specified. The division of the items in the above description is not essential to the invention, and the matters described in two or more items may be used in combination as necessary, or the matter described in a certain item may be applied to the matter described in another item (unless there is a contradiction). The boundaries between functional units or processing units in the functional block diagrams do not always correspond to the boundaries between physical components. The operation of a plurality of functional units may be physically performed by one component, or the operation of one functional unit may be physically performed by a plurality of components. In the processing procedure described in the embodiment, the order of the processing may be changed as long as there is no contradiction. Although the base station apparatus 10 and the user equipment 20 have been described using functional block diagrams for convenience of description of the processing, such equipment may be realized by hardware, software, or a combination thereof. The software operated by the processor of the base station apparatus 10 according to the embodiment of the invention and the software operated by the processor of the user equipment 20 according to the embodiment of the invention may be stored in a random access memory (RAM), a flash memory, a read only memory (ROM), an EPROM, an EEPROM, a register, a hard disk (HDD), a removable disk, a CD-ROM, a database, a server, or any other appropriate storage media.

In addition, the notification of information is not limited to the aspect/embodiment described in the present disclosure, and may be performed using other methods. For example, the notification of information may be performed using physical layer signaling (for example, Downlink Control Information (DCI), Uplink Control Information (UCI)), higher layer signaling (for example, Radio Resource Control (RRC) signaling, Medium Access Control (MAC) signaling, broadcast information (Master Information Block (MIB), System Information Block (SIB)), other signals, or a combination thereof. In addition, the RRC signaling may be called an RRC message, and may be, for example, an RRC connection setup message or an RRC connection reconfiguration message.

Each aspect/embodiment described in the present disclosure may be applied to at least one of systems, which use Long Term Evolution (LTE), LTE-Advanced (LTE-A), SUPER 3G, IMT-Advanced, 4th generation mobile communication system (4G), 5th generation mobile communication system (5G), Future Radio Access (FRA), and new Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), and other appropriate systems, and next-generation systems extended based on these. In addition, a plurality of systems may be combined (for example, a combination of 5G and at least one of LTE and LTE-A) to be applied.

In the processing procedure, sequence, flowchart, and the like in each aspect/embodiment described in this specification, the order may be changed as long as there is no contradiction. For example, for the methods described in this disclosure, elements of various steps are presented using an exemplary order, and the invention is not limited to the specific order presented.

The specific operation described as being performed by the base station apparatus 10 in this specification may be performed by its upper node in some cases. In a network including one or more network nodes each having the base station apparatus 10, it is obvious that various operations performed for communication with the user equipment 20 can be performed by at least one of the base station apparatus 10 and other network nodes (for example, MME, S-GW, and the like can be considered, but the network node is not limited thereto) other than the base station apparatus 10. Although a case where the number of other network nodes other than the base station apparatus 10 is one has been exemplified above, the other network nodes may be a combination (for example, MME and S-GW) of a plurality of other network nodes.

Information or signals described in the present disclosure can be output from a higher layer (or a lower layer) to a lower layer (or a higher layer). Information or signals described in the present disclosure may be input and output through a plurality of network nodes.

Information or the like that is input and output may be stored in a specific place (for example, a memory) or may be managed using a management table. The information or the like that is input and output can be overwritten, updated, or added. The information or the like that is output may be deleted. The information or the like that is input may be transmitted to another device.

The judging in the present disclosure may be performed based on a value expressed by 1 bit (0 or 1), may be performed based on Boolean (true or false), or may be performed by numerical value comparison (for example, comparison with a predetermined value).

Software, regardless of whether this is called software, firmware, middleware, microcode, a hardware description language, or any other name, should be interpreted broadly to mean instructions, instruction sets, codes, code segments, program codes, programs, subprograms, software modules, applications, software applications, software packages, routines, subroutines, objects, executable files, execution threads, procedures, functions, and the like.

In addition, software, instructions, information, and the like may be transmitted and received through a transmission medium. For example, in a case where software is transmitted from a website, a server, or other remote sources using at least one of the wired technology (coaxial cable, optical fiber cable, twisted pair, digital subscriber line (DSL), and the like) and the wireless technology (infrared, microwave, and the like), at least one of the wired technology and the wireless technology is included within the definition of the transmission medium.

The information, signals, and the like described in this disclosure may be expressed using any of a variety of different technologies. For example, data, instructions, commands, information, signals, bits, symbols, and chips that can be referred to throughout the above description may be represented by voltage, current, electromagnetic waves, magnetic field or magnetic particles, light field or photon, or any combination thereof.

In addition, the terms described in the present disclosure and the terms necessary for understanding the present disclosure may be replaced with terms having the same or similar meaning. For example, at least one of the channel and the symbol may be a signal (signaling). In addition, the signal may be a message. In addition, a component carrier (CC) may be called a carrier frequency, a cell, a frequency carrier, or the like.

The terms "system" and "network" used in this disclosure are used interchangeably.

In addition, the information, parameters, and the like described in the present disclosure may be expressed using an absolute value, may be expressed using a relative value from a predetermined value, or may be expressed using another corresponding information. For example, the radio resource may be indicated by an index.

The names used for the parameters described above are not limiting names in any way. In addition, equations and the like using these parameters may be different from those explicitly disclosed in the present disclosure. Since various channels (for example, PUSCH, a PUCCH, and a PDCCH) and information elements can be identified by any suitable names, various names allocated to these various channels and information elements are not limiting names in any way.

In the present disclosure, terms such as "base station (BS)", "radio base station", "base station apparatus", "fixed station", "NodeB", "eNodeB (eNB)", "gNodeB (gNB)","access point", "transmission point", "reception point", "transmission/reception point", "cell", "sector", "cell group", "carrier", and "component carrier" can be used interchangeably. The base station may also be referred to as terms, such as a macro cell, a small cell, a femto cell, and a pico cell.

The base station can include one or more (for example, three) cells. When the base station includes a plurality of cells, the entire coverage area of the base station can be divided into a plurality of smaller areas, and each of the smaller area can also provide a communication service using a base station subsystem (for example, a remote radio head (RRH). The term "cell" or "sector" refers to a part or the entirety of the coverage area of at least one of a base station and a base station subsystem that provides communication services in this coverage.

In the present disclosure, terms such as "mobile station (MS)", "user terminal", "user equipment (UE)", and "terminal" can be used interchangeably.

The mobile station may also be called a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms depending on those skilled in the art.

At least one of the base station and the mobile station may be called a transmitting device, a receiving device, a communication device, and the like. In addition, at least one of the base station and the mobile station may be a device mounted on a moving body, the moving body itself, and the like. The moving body may be a vehicle (for example, a car or an airplane), an unmanned moving body (for example, a drone or a self-driving car), or a robot (maned or unmanned). In addition, at least one of the base station and the mobile station necessarily includes a device that does not move during a communication operation. For example, at least one of the base station and the mobile station may be an Internet of Things (IoT) device, such as a sensor.

In addition, the base station apparatus in the present disclosure may be read as user equipment. For example, each aspect/embodiment of the present disclosure may be applied to a configuration in which communication between base station apparatus and user equipment is replaced with communication between a plurality of pieces of user equipment 20 (which may be called, for example, Device-to-Device (D2D) or Vehicle-to-Everything (V2X)). In this case, the user equipment 20 may have the above-described function of the base station apparatus 10. In addition, terms such as "uplink" and "downlink" may be read as terms corresponding to terminal-to-terminal communication (for example, "side"). For example, an uplink channel, a downlink channel, and the like may be read as a side channel.

Similarly, the user equipment in the present disclosure may be read as base station apparatus. In this case, the base station apparatus may have the above-described function of the user equipment.

The terms "determining" used in the present disclosure may involve a wide variety of operations. For example, "determining" can include considering judging, calculating, computing, processing, deriving, investigating, looking up (search, inquiry) (for example, looking up in a table, database, or another data structure), and ascertaining as "determining". In addition, "determining" can include considering receiving (for example, receiving information), transmitting (for example, transmitting information), input, output, accessing (for example, accessing data in a memory) as "determining". In addition, "determining" can include considering resolving, selecting, choosing, establishing, comparing, and the like as "determining". In other words, "determining" can include considering any operation as "determining". In addition, "determining" may be read as "assuming", "expecting", "considering", and the like.

The terms "connected" and "coupled" or variations thereof mean any direct or indirect connection or coupling between two or more elements, and can include a case where one or more intermediate elements are present between two elements "connected" or "coupled" to each other. The coupling or connection between elements may be physical, logical, or a combination thereof. For example, "connection" may be read as "access". When used in this disclosure, two elements can be considered to be "connected" or "coupled" to each other using at least one of one or more wires, cables, and printed electrical connections and using some non-limiting and non-comprehensive examples, such as electromagnetic energy having wavelengths in a radio frequency domain, a microwave domain, and a light (both visible and invisible) domain.

The reference signal may be abbreviated as RS (Reference Signal), and may be called Pilot according to the applied standard.

The description "based on" used in this disclosure does not mean "based only on" unless otherwise specified. In other words, the description "based on" means both "based only on" and "based at least on".

Any reference to elements using designations such as "first" and "second" used in the present disclosure does not generally limit the quantity or order of the elements. These designations can be used in the present disclosure as a convenient method for distinguishing between two or more elements. Therefore, references to first and second elements do not mean that only two elements can be adopted or that the first element should precede the second element in any way.

"Means" in the configuration of each device described above may be replaced with "unit", "circuit", "device", and the like.

When "include", "including", and variations thereof are used in the present disclosure, these terms are intended to be inclusive similarly to the term "comprising". In addition, the term "or" used in the present disclosure is intended not to be an exclusive-OR.

A radio frame may be configured by one or more frames in the time domain. Each of one or more frames in the time domain may be referred to as a subframe. In addition, the subframe may be configured by one or more slots in the time domain. The subframe may be a fixed time length (for example, 1 ms) that does not depend on numerology.

Numerology may be a communication parameter applied to at least one of transmission and reception of a certain signal or channel. Numerology may indicate at least one of, for example, subcarrier spacing (SCS), bandwidth, symbol length, cyclic prefix length, transmission time interval (TTI), the number of symbols per TTI, radio frame configuration, specific filtering processing performed in the frequency domain by the transceiver, and specific windowing processing performed in the time domain by the transceiver.

A slot may be configured by one or more symbols (Orthogonal Frequency Division Multiplexing (OFDM) symbol, Single Carrier Frequency Division Multiple Access (SC-FDMA) symbol, and the like) in the time domain. A slot may be a time unit based on numerology.

A slot may include multiple mini-slots. Each mini-slot may be configured by one or more symbols in the time domain. In addition, the mini-slot may be called a subslot. A mini-slot may be configured by a smaller number of symbols than that in a slot. A PDSCH (or a PUSCH) transmitted in time units larger than the mini-slot may be referred to as PDSCH (or PUSCH) mapping type A. A PDSCH (or a PUSCH) transmitted using a mini-slot may be referred to as PDSCH (or PUSCH) mapping type B.

Each of the radio frame, the subframe, the slot, the mini-slot, and the symbol indicates a time unit when transmitting a signal. The radio frame, the subframe, the slot, the mini-slot, and the symbol may have different names corresponding thereto.

For example, one subframe may be called a transmission time interval (TTI), a plurality of consecutive subframes may be called a TTI, and one slot or one mini-slot may be called a TTI. That is, at least one of the subframe and the TTI may be a subframe (1 ms) in the known LTE, a period (for example, 1 to 13 symbols) shorter than 1 ms, or a period longer than 1 ms. In addition, the unit indicating the TTI may be called a slot, a mini-slot, or the like, instead of a subframe.

Here, the TTI refers to, for example, a minimum time unit of scheduling in radio communication. For example, in the LTE system, the base station performs scheduling for allocating radio resources (frequency bandwidth, transmission power, and the like that can be used in each user equipment 20) to each user equipment 20 in TTI units. In addition, the definition of the TTI is not limited to this.

The TTI may be a transmission time unit, such as a channel-encoded data packet (transport block), a code block, and a code word, or may be a processing unit, such as scheduling and link adaptation. In addition, when a TTI is given, a time section (for example, the number of symbols) in which a transport block, a code block, a code word, and the like are actually mapped may be shorter than the TTI.

In addition, when one slot or one mini-slot is called a TTI, one or more TTIs (that is, one or more slots or one or more mini-slots) may be a minimum time unit for scheduling. In addition, the number of slots (the number of mini-slots) configuring the minimum time unit of the scheduling may be controlled.

A TTI having a time length of 1 ms may be called a normal TTI (TTI in LTE Rel. 8-12), a long TTI, a normal subframe, a long subframe, a slot, and the like. A TTI shorter than the normal TTI may be called a short TTI, a partial or fractional TTI, a short subframe, a mini-slot, a subslot, a slot, and the like.

In addition, a long TTI (for example, a normal TTI or a subframe) may be read as a TTI having a time length exceeding 1 ms, and a short TTI may be read as a TTI shorter than the TTI length of the long TTI and equal to or longer than 1 ms.

A resource block (RB) is a resource allocation unit in the time domain and the frequency domain, and may include one or more consecutive subcarriers in the frequency domain. The number of subcarriers included in the RB may be the same regardless of numerology, and may be, for example, 12. The number of subcarriers included in the RB may be determined based on numerology.

In addition, the time domain of the RB may include one or more symbols, and may be the length of one slot, one mini-slot, one subframe, or one TTI. One TTI, one subframe, and the like may each be configured by one or more resource blocks.

In addition, one or more RBs may be called a physical resource block (PRB: Physical RB), a sub-carrier group (SCG), a resource element group (REG), a PRB pair, an RB pair, and the like.

In addition, the resource block may be configured by one or more resource elements (REs). For example, one RE may be a radio resource area of one subcarrier and one symbol.

A bandwidth part (BWP) (which may be called a partial bandwidth or the like) may indicate a subset of consecutive common resource blocks (common RBs) for certain numerology in a certain carrier. Here, the common RB may be specified by an index of the RB with the common reference point of the carrier as a reference. The PRB may be defined by a certain BWP and numbered within the BWP.

The BWP may include a BWP for UL (UL BWP) and a BWP for DL (DL BWP). For the UE, one or more BWPs may be set in one carrier.

At least one of the set BWPs may be active, and it may not be assumed that the UE transmits and receives a predetermined signal/channel outside the active BWP. In addition, "cell", "carrier", and the like in the present disclosure may be read as "BWP".

The structures of the radio frame, the subframe, the slot, the mini-slot, and the symbol described above are merely examples. For example, the number of subframes included in a radio frame, the number of slots per subframe or radio frame, the number of mini-slots included in a slot, the number of symbols and RBs included in a slot or mini-slot, the number of subcarriers included in an RB, the number of symbols in the TTI, the symbol length, the cyclic prefix (CP) length, and the like can be changed in various ways.

In the present disclosure, in a case where articles, for example, a, an, and the in English, are added by translation, the present disclosure may include that nouns subsequent to these articles are plural.

In the present disclosure, the expression "A and B are different" may mean "A and B are different from each other". In addition, the expression may mean that "A and B each are different from C". Terms such as "separate", "coupled" may be interpreted similarly to "different".

Each aspect/embodiment described in the present disclosure may be used alone, may be used in combination, or may be switched and used according to execution. In addition, the notification of predetermined information (for example, notification of "X") is not limited to being explicitly performed, and may be performed implicitly (for example, without the notification of the predetermined information).

In addition, in the present disclosure, the SS block or the CSI-RS is an example of a synchronization signal or a reference signal.

While the present disclosure has been described in detail, it is apparent to those skilled in the art that the present disclosure is not limited to the embodiment described in the present disclosure. The present disclosure can be implemented as modified and changed aspects without departing from the spirit and scope of the present disclosure defined by the description of the claims. Therefore, the description of the present disclosure is intended for illustrative purposes, and has no restrictive meaning to the present disclosure.

### EXPLANATIONS OF LETTERS OR NUMERALS

- 10: BASE STATION APPARATUS

- 110: TRANSMITTING UNIT
- 120: RECEIVING UNIT
- 130: CONFIGURATION UNIT
- 140: CONTROL UNIT
- 20: USER EQUIPMENT
- 210: TRANSMITTING UNIT
- 220: RECEIVING UNIT
- 230: CONFIGURATION UNIT
- 240: CONTROL UNIT
- 1001: PROCESSOR
- 1002: STORAGE DEVICE
- 1003: AUXILIARY STORAGE DEVICE
- 1004: COMMUNICATION DEVICE
- 1005: INPUT DEVICE
- 1006: OUTPUT DEVICE

## Claims

1. A base station apparatus, comprising:
a receiving unit configured to receive a first message from a user equipment in a two-step random access procedure; and
a control unit that determines not to return any feedback to the user equipment when the receiving unit correctly receives only a part of a plurality of messages included in the first message.

2. A base station apparatus, comprising:
a receiving unit configured to receive a first message from a user equipment in a two-step random access procedure; and
a transmitting unit that transmits a second message to the user equipment using an RNTI for a random access response when the receiving unit correctly receives only a part of a plurality of messages included in the first message.

3. A base station apparatus, comprising:
a receiving unit configured to receive a first message from a user equipment in a two-step random access procedure; and
a transmitting unit that transmits a retransmission request to the user equipment when the receiving unit correctly receives only a part of a plurality of messages included in the first message.

4. A user equipment, comprising:
a receiving unit configured to receive a second message transmitted from a base station apparatus as a response to a first message in a two-step random access procedure; and
a transmitting unit that repeatedly transmits the first message or falls back to a four-step random access procedure and transmits a preamble when the receiving unit does not correctly receive the second message.

5. A user equipment, comprising:
a receiving unit configured to receive a second message transmitted from a base station apparatus as a response to a first message in a two-step random access procedure; and
a transmitting unit that transmits a NACK for a message, which is not correctly received, to the base station apparatus when the receiving unit does not correctly receive only a part of a plurality of messages included in the second message.

6. A user equipment, comprising:
a receiving unit configured to receive a second message transmitted from a base station apparatus as a response to a first message in a two-step random access procedure; and
a transmitting unit that transmits an ACK for a message, which is correctly received, to the base station apparatus when the receiving unit correctly receives only a part of a plurality of messages included in the second message.
